Europäisches Patentamt

European Patent Office

Office européen des brevets

(11) Veröffentlichungsnummer : **0 095 629**
B1

# (12) EUROPÄISCHE PATENTSCHRIFT

(45) Veröffentlichungstag der Patentschrift :
06.05.87

(21) Anmeldenummer : 83104740.2

(22) Anmeldetag : 13.05.83

(51) Int. Cl.⁴ : **C 08 L 9/00**, C 08 F 36/04, C 08 F 4/48

(54) Verfahren zur Herstellung von Materialien und Konstruktionselementen, die zum Abdichten gegen unpolare, organische Medien geeignet sind.

(30) Priorität : 28.05.82 DE 3220151
21.03.83 DE 3310118

(43) Veröffentlichungstag der Anmeldung :
07.12.83 Patentblatt 83/49

(45) Bekanntmachung des Hinweises auf die Patenterteilung : 06.05.87 Patentblatt 87/19

(84) Benannte Vertragsstaaten :
AT BE DE FR GB IT LU NL SE

(56) Entgegenhaltungen :
DE-A- 1 770 928
DE-A- 1 958 650

(73) Patentinhaber : HÜLS AKTIENGESELLSCHAFT
Patentabteilung / PB 15 - Postfach 13 20
D-4370 Marl 1 (DE)

(72) Erfinder : Nordsiek, Karl-Heinz, Dr.
Neumarkstrasse 4
D-4370 Marl (DE)
Erfinder : Knist, Johannes, Dr.
Alleestrasse 19
D-4270 Dorsten (DE)
Erfinder : Tornau, Johannes, Dr.
Auf dem Beerenkamp 84
D-4270 Dorsten (DE)

## Beschreibung

Es ist bekannt, in der Hitze vulkanisierbare Massen, welche Nitrilkautschuk enthalten, zur Herstellung von Materialien und Konstruktionselementen zum Abdichten gegen unpolare, organische Medien, das sind vorwiegend aliphatische Kohlenwasserstoffe, wie beispielsweise Treibstoffe und Mineralöle, einzusetzen.

Mit Nitrilkautschuk (nitrile-butadiene rubber, NBR) werden Copolymerisate aus 1,3-Butadien und Acrylnitril bezeichnet. Ihre Vulkanisate zeichnen sich durch eine hohe Beständigkeit (Quellbeständigkeit) gegen unpolare, organische Medien aus. Sie werden daher für elastische Dichtungen, Tankschläuche, Kabelmäntel und dergleichen eingesetzt. Sie entsprechen jedoch nicht immer den Anforderungen der Praxis, wenn zusätzliche spezielle Eigenschaften gefordert werden.

Die Aufgabe der Erfindung ist es, ein Verfahren zur Herstellung von Materialien und Konstruktionselementen bereitzustellen, welche zum Abdichten gegen unpolare, organische Medien geeignet sind und eine vorteilhafte Eigenschaftskombination aufweisen, so daß dem Fachmann ein erweitertes Angebot zur Auswahl der im Einzelfall optimalen technischen Lösung zur Verfügung steht.

Diese Eigenschaftskombination beinhaltet eine hinreichend gute Verarbeitbarkeit bei Misch- und Verformungsprozessen ; ein hinreichend gutes Vulkanisationsverhalten, das hinsichtlich Vernetzungsgeschwindigkeit und Vernetzungsausbeute dem der bekannten, reaktionsschnellen Allzweckkautschuke (NR, IR, BR und SBR) nahe kommt ; ein hinreichend gutes Covulkanisationsverhalten bei Verschnitten mit Allzweckkautschuken, NBR und auch EPDM und IIR (unter IIR werden Butylkautschuk sowie chlorierter und bromierter Butylkautschuk, auch Chlor- bzw. Brombutylkautschuk genannt, verstanden) sowie ein hinreichend gutes Covulkanisationsverhalten bei der Herstellung von Verbundwerkstoffen aus unterschiedlichen Lagen ; die Vulkanisate sollen gegen unpolare, organische Medien hinreichend quellbeständig sein. Die Aufgabe wurde in überraschender Weise wie im Patentanspruch angegeben gelöst.

Die Verfahrenserzeugnisse (Vulkanisate) sind ebenso wie die vulkanisierbare Masse neu, da die ihnen zugrundeliegenden Polyisoprene und Isopren/Styrol-Copolymerisate (Kautschuke der Erfindung) neu sind oder als neu zu gelten haben. Diese unterscheiden sich, wie im folgenden gezeigt wird, in charakteristischer Weise von den vergleichbaren Polyisoprenen und Isopren/Styrol-Copolymerisaten des Standes der Technik (DE-PS-1 770 928, DE-OSS-2 459 357 und 2 843 794). Die Kautschuke des Standes der Technik werden durch (nahezu) isotherme Polymerisation von Isopren oder der Isopren enthaltenden Monomerengemische erhalten. (In den Beispielen der DE-OS-2 843 794 ist der Temperaturbereich bei der Herstellung von Butadien/Styrol-Copolymerisaten 50 bis 60 °C.) Die so erhaltenen Makromoleküle weisen eine (nahezu) gleichmäßige Verteilung von Struktureinheiten (SE), die durch 1,2- und 3,4-Polymerisation von Isopren erhalten sind, auf. Diese folgt aus der Temperaturabhängigkeit der 1,2- und 3,4-Polymerisation relativ zur 1,4-Polymerisation von 1,3-Dienen, welche am Beispiel des 1,3-Butadiens grundlegend untersucht wurde (DE-PS-2 158 575).

Aufgrund der Temperaturführung bei der Herstellung der Polyisoprene und Isopren/Styrol-Copolymerisate gemäß dem kennzeichnenden Teil des Patentanspruchs weisen die so erhaltenen Makromoleküle eine ungleichmäßige Verteilung von SE, die durch 1,2- und 3,4-Polymerisation von Isopren und gegebenenfalls auch 1,3-Butadien erhalten sind, auf. Darunter wird verstanden, daß die Häufigkeit dieser SE (bzw. der diesen entsprechenden Vinyl- und Isopropenylseitengruppen) vom einen zum anderen Ende in (entlang) der Hauptkette bzw. im Falle von Langkettenverzweigungen auch in (entlang) den Seitenketten des Makromoleküls beträchtlich abnimmt (vgl. DE-PS-2 158 575).

Die Kautschuke der Erfindung unterscheiden sich also strukturell in charakteristischer Weise von den Kautschuken des Standes der Technik. Sie unterscheiden sich darüber hinaus in ihren anwendungstechnischen Eigenschaften von den Kautschuken des Standes der Technik. Die aus ihnen herstellbaren Vulkanisate zeigen — vorteilhafterweise — in einem breiteren Temperaturbereich Quellbeständigkeit gegen unpolare, organische Medien, Schwingungsdämpfung und Gasdichtigkeit und zeigen ein besseres Kälteverhalten.

Die Massen der Erfindung haben den zusätzlichen Vorteil, daß die daraus herstellbaren Vulkanisate eine den Allzweckkautschuken deutlich überlegene, schwingungsdämpfende Wirkung zeigen. Sie eignen sich daher zur Herstellung von Konstruktionselementen zur Schwingungsdämpfung, insbesondere auf Einsatzgebieten, auf denen zugleich Quellbeständigkeit gegen unpolare, organische Medien gefordert wird, beispielsweise zur Herstellung von Gebäude-, Maschinen- und Brückenlagern, Stoßfängern, Pufferelementen, sowie von Konstruktionselementen zur Schallabsorption.

Die Massen der Erfindung haben den weiteren zusätzlichen Vorteil, daß die daraus herstellbaren Vulkanisate bei dynamischer Beanspruchung einen vergleichsweise geringen Wärmeaufbau zeigen. Sie eignen sich daher zur Herstellung von vulkanisierbaren Laufstreifen für die Laufflächen von Personenkraftwagen-Luftreifen mit hoher Rutschsicherheit, hohem Fahrkomfort und überraschend geringem Rollwiderstand.

Die Massen der Erfindung eignen sich auch zur Herstellung von Materialien und Konstruktionselementen zum Abdichten gegen Gase, beispielsweise zur Herstellung von Innerlinern von schlauchlosen Reifen, sowie von Membranen und Schlauchen.

Bei der Auswahl der Herstellungsparameter ist zu beachten, daß die Wirkungen der unterschiedlichen SE in den Makromolekülen (Mengenanteil in Massenprozent) im Hinblick auf die makroskopischen Eigenschaften in den Kautschuken der Erfindung (Anhebung von Tg), den vulkanisierbaren Massen und den daraus herstellbaren Vulkanisaten (Verbesserung der Gasdichtigkeit und vor allem der Quellbeständigkeit gegen unpolare, organische Medien) graduelle Unterschiede aufweisen.

Sie entsprechen der Reihenfolge :

SE, die durch statistische Copolymerisation von Styrol erhalten sind,

> SE, die durch 1,2- und 3,4-Polymerisation von Isopren erhalten sind,

> SE, die durch 1,2-Polymerisation von 1,3-Butadien erhalten sind,

> SE, die durch 1,4-Polymerisation von Isopren erhalten sind, > SE, die durch 1,4-Polymerisation von 1,3-Butadien erhalten sind.

Die Kautschuke der Erfindung können auf einfache Weise in Analogie zu den entsprechenden Herstellungsverfahren des Standes der Technik einschließlich der bekannten Verfahren zur 1,2-Polymerisation von 1,3-Butadien (DE-PS-2 158 575) erhalten werden.

Das inerte, organische Lösemittel ist vorzugsweise ein Kohlenwasserstoff-Lösemittel.

Als Kohlenwasserstoff-Lösemittel, lithiumorganischer Katalysator und Cokatalysator können die in der DE-PS-2 158 575 genannten eingesetzt werden. Als Cokatalysatoren sind bifunktionelle Lewis-Basen bevorzugt.

Die Mengen des Katalysators und des Cokatalysators sind vorzugsweise 0,01 bis 0,08 bzw. 0,3 bis 2 Massenprozent, bezogen auf Monomer, wobei das Massenverhältnis von Cokatalysator zu Katalysator 5 : 1 bis 200 : 1 beträgt.

Zur Verminderung des kalten Flusses der Kautschuke der Erfindung können diese, wie im Patentanspruch angegeben, in Gegenwart von Divinylbenzol als Verzweigungsmittel, vorzugsweise von 0,02 bis 0,08 Massenprozent desselben, bezogen auf Monomer, hergestellt werden.

Die Kautschuke der Erfindung können durch diskontinuierliche oder kontinuierliche Polymerisation erhalten werden.

Die Kautschuke der Erfindung können in den vulkanisierbaren Massen allein oder im Verschnitt mit anderen Kautschuken, insbesondere den bekannten Allzweckkautschuken, aber auch mit Spezialkautschuken, wie beispielsweise NBR oder mit schwach ungesättigten Kautschuken, wie beispielsweise EPDM oder IIR, eingesetzt werden. Der Anteil der Kautschuke der Erfindung im Verschnitt beträgt vorzugsweise > 50 Massenprozent und richtet sich nach der angestrebten Eigenschaftskombination der vulkanisierbaren Masse im Hinblick auf den jeweiligen Verwendungszweck. Dabei entspricht die Wirkung der Kautschuke der Erfindung in den vulkanisierbaren Massen bzw. in den daraus erhaltenen Vulkanisaten ihrem Anteil im Verschnitt.

Unter Vulkanisationsmittel werden die bekannten Vulkanisationsysteme verstanden. Ein bevorzugtes Vulkanisationssystem enthält Schwefel in Kombination mit den üblichen Beschleunigern.

Die Menge des Vulkanisationsmittels richtet sich nach den übrigen Komponenten und dem jeweiligen Verwendungszweck und kann durch einfache, orientierende Versuche ermittelt werden.

Als Zusatzstoffe können die in der Kautschuktechnik üblichen Füllstoffe, wie beispielsweise Ruße unterschiedlicher Aktivität, feinteilige mineralische Füllstoffe, wie Kielselsäuren, Kreiden, Silikate und dergleichen, eingesetzt werden. Die eingesetzten Mengen können sehr stark variieren und richten sich nach dem jeweilgen Verwendungszweck.

Als Zusatzstoffe können die in der Kautschuktechnik üblichen Weichermacheröle eingesetzt werden. Bevorzugt sind aromatische, aliphatische und naphthenische Kohlenwasserstoffe. Ihre Mengen richten sich nach dem jeweiligen Verwendungszweck.

Als Zusatzstoffe können auch weitere übliche Hilfsmittel, wie beispielsweise Alterungsschutzmittel und Ozonschutzwachse, in wirksamen Mengen zugesetzt werden.

Zur Herstellung der Massen der Erfindung aus den Komponenten und zur Weiterverarbeitung zu den Vulkanisaten können die in der Gummiindustrie üblichen Misch-, Verformungs- und Vulkanisationsanlagen dienen, wie beispielsweise Innenmischer, Walzwerke, Extruder, Kalander, Spritzgießeinrichtungen, Vulkanisationspressen und kontinuierlich arbeitende Vernetzungsanlagen.

Die Erfindung wird durch die folgenden Beispiele erläutert. Darin bedeuten Teile (T.) Massenteile und Prozent (%) Massenprozent (außer in Tabelle 3).

Herstellung der Kautschuke der Erfindung

400 T. Hexan, 100 T. Monomer, 0,03 T. Divinylbenzol und Ethylenglykoldimethylether in den in Tabelle 1 angegebenen Mengen wurden unter sorgfältigem Ausschluß von Luft und Feuchtigkeit in einen Rührautoklaven gegeben. Bei 40 °C wurde die Polymerisation durch Zugabe von n-Butyllithium gestartet. Nach Beendigung der Polymerisation wurden 0,5 T. 2,2'-Methylen-bis-(4-methyl-6-tertiärbutylphenol) zugegeben. Das Lösemittel wurde mit Wasserdampf abgetrennt und das Polymerisat getrocknet.

(Siehe Tabelle 1 Seite 4 f.)

Tabelle 1

Herstellung der Kautschuke 1 und 2

| Beispiel | 1 | 2 |
|---|---|---|
| Monomer | Isopren | Isopren/Styrol (80 T./20 T.) |
| Ethylenglykoldimethylether | 0,5 T. | 0,6 T. |
| n-Butyllithium *) | 0,01 T. | 0,05 T. |
| Endtemperatur | 100 °C | 90 °C |
| Polymerisationszeit | 24 min | 16 min |

*) polymerisationswirksame Katalysatormenge

Tabelle 2

Charakterisierung der Kautschuke 1 und 2

| Beispiel | 1 | 2 |
|---|---|---|
| Gelgehalt *) | 2,6 % | 2,3 % |
| 1,2-Gehalt der Diene **) | 6 % | 5 % |
| 3,4-Gehalt des Isoprens **) | 71 % | 57 % |
| $ML_{1+4}$, 100 °C, DIN 53 523 | 100 | 90 |
| Defo-Elastizität | 25 | 28 |
| (80 °C, DIN 53 514) | | |
| Tg (Torsionsschwingung, Dämpfungsmaximum, DIN 53 520) | -12 °C | -3 °C |

*) bestimmt nach der in DE-PS-2 158 575 beschriebenen Methode

**) bestimmt durch IR-Analyse

Herstellung der vulkanisierbaren Massen

Die vulkanisierbaren Massen (Compounds) wurden entsprechend der folgenden Rezeptur hergestellt. In einem Laborkneter (Typ GK 2) wurde zunächst die Grundmischung gemäß folgender Rezeptur hergestellt :

| | |
|---|---|
| Kautschuk | 100 T. |
| HAF-Ruß N-330 | 50 T. |
| aromatisches Öl | 5 T. |
| N-Phenyl-N'-isopropyl-p-phenylendiamin | 1 T. |
| Zinkoxid | 5 T. |
| Stearinsäure | 2 T. |

Nach einer Lagerzeit von 6 h erfolgte die Einarbeitung des Vulkanisationssystems, bestehend aus

| | |
|---|---|
| Schwefel | 2 T. und |
| N-Cyclohexyl-mercaptobenzthiazol | 0,75 T. |

Die eingesetzten Kautschuke waren die Kautschuke 1 und 2 sowie zum Vergleich die Kautschuke des Standes der Technik : SBR 1 500 (IISRP) (A), ein handelsüblicher Chlorbutylkautschuk (B) und ein handelsüblicher NBR (Massenverhältnis Acrylnitril/1,3-Butadien : 28/72) (C).

Aus den Compounds 1, 2 und A bis C wurden unter den Vernetzungsbedingungen 40 min/150 °C die vulkanisierten Probekörper 1, 2 und A bis C erhalten. Sie wurden wie folgt charakterisiert :

(Siehe Tabelle 3 Seite 5 f.)

Die aus den Compounds der Erfindung erhaltenen, vulkanisierten Probekörper 1 und 2 weisen eine vorteilhafte Eigenschaftskombination auf.

Sie übertreffen die Probekörper A (auf Basis eines SBR, d. h. eines Allzweckkautschuks) bei der

## Tabelle 3

### Anwendungstechnische Eigenschaften der vulkanisierten Probekörper

| Probekörper | 1 | 2 | A | B | C |
|---|---|---|---|---|---|
| Zugfestigkeit (DIN 53 504), /MPa7 | 14,3 | 18,7 | 18,5 | 13,4 | 19,8 |
| Bruchdehnung (DIN 53 504), /%7 | 481 | 499 | 523 | 528 | 410 |
| Modul 300 % (DIN 53 504), /MPa7 | 7,7 | 7,4 | 8,9 | 7,1 | 10,2 |
| Härte, 20 °C, Shore A | 61 | 60 | 61 | 59 | 65 |
| Elastizität, 20 °C (DIN 53 512), /%7 | 6 | 10 | 40 | 15 | 31 |
| Dämpfung, 20 °C, 1 Hz (RHEOVIBRON-Gerat), tan delta | 0,20 | 0,17 | 0,065 | 0,15 | 0,09 |
| Compression set, 22 h/70 °C, /%7 | 19 | 18 | 16 | 21 | 19 |
| Abrieb (DIN 53 516), /mm³7 | 280 | 305 | 135 | 321 | 128 |
| Pendelreibung, Beton naß | 75 | 73 | 50 | 71 | 53 |
| Volumenquellung *), ASTM-Öl II, 7 d, 20 °C, /%7 | 2,8 | 1,9 | 15 | 6,5 | 0,8 |
| Gasdurchlässigkeit, Luft, 20 °C, (DIN 53 536) $\frac{cm^3}{m^2 \cdot d \cdot bar}$ | 31 | 27 | 135 | 21 | 81 |
| Rheometer, 150 °C, $t_{10}$ % Vernetzung, /min7 | 9,0 | 9,8 | 10,1 | 18,5 | 6,5 |
| $t_{90}$ % Vernetzung, /min7 | 13,6 | 13,6 | 16,4 | 31,2 | 9,9 |
| Lagenverschweißung, Probekörper aus 2 Lagen von jeweils 25 mm · 150 mm · 2 mm, davon eine Lage aus Compound A, Separationskraft /N/mm Probenbreite7 | 3,2 | 3,1 | 3,3 | 0,9 | 2,8 |

*) Probekörper 50 mm · 50 mm · 2 mm

0 095 629

Quellbeständigkeit und der Gasdichtigkeit, welche durch die Volumenquellung bzw. die Gasdurchlässigkeit charakterisiert werden. Sie erreichen das Wertelevel des Probekörpers A bei der Lagenverschweißung mit einer Lage aus Compound A (auf Basis des SBR), d. h. sie zeigen ein ähnlich gutes Covulkanisationsverhalten bei der Herstellung von Verbundwerkstoffen aus unterschiedlichen Lagen.

Sie übertreffen die Probekörper B (auf Basis eines Chlorbutylkautschuks, mit dem bekanntlich Vulkanisate mit hoher Gasdichtigkeit erhalten werden können) bei der Quellbeständigkeit und in besonders starkem Maße bei der Lagenverschweißung. Die Werte für die Gasdurchlässigkeit sind nahezu so niedrig wie der entsprechende Wert des Probekörpers B.

Sie übertreffen den Probekörper C (auf Basis eines NBR, mit dem bekanntlich Vulkanisate mit hoher Quellbeständigkeit gegen unpolare, organische Medien erhalten werden können) bei der Gasdichtigkeit, die durch die Gasdurchlässigkeit charakterisiert wird. Die Werte für die Volumenquellung erreichen nicht das niedrige Niveau des entsprechenden Wertes des Probekörpers C. Sie kommen diesem jedoch vergleichsweise nahe.

## Patentanspruch

Verfahren zur Herstellung von Materialen und Konstruktionselementen, die zum Abdichten gegen unpolare, organische Medien geeignet sind ; das Verfahren besteht aus der Herstellung einer in der Hitze vulkanisierbaren Masse, der Formgebung und der Vulkanisation ; die Herstellung der Masse erfolgt durch Mischen der Bestandteile in üblichen Mischern ; die Bestandteile der Masse sind :
— eine Kautschukkomponente,
— eine wirksame Menge eines Vulkanisationsmittels und
— übliche Zusatzstoffe ;
das Verfahren ist durch die folgenden Merkmale gekennzeichnet :
a. die Kautschukkomponente besteht aus
a.1 > 30 bis 100 Massenteilen eines Kautschuks aus der Gruppe der Polyisoprene, der amorphen Isopren/Styrol-Copolymerisate und ihrer Gemische ;
der Kautschuk weist eine Mooney-Viskosität (ML $_{1+4}$, 100 °C ; DIN 53 523) von 30 bis 120, eine Defo-Elastizität (80 °C, DIN 53 514) von 12 bis 45, eine Uneinheitlichkeit (U = $(M_w/M_n)$ — 1) von 0,8 bis 5,5 und einen Glasübergang (Tg, Torsionsschwingung, Dämpfungsmaximum, DIN 53 520) zwischen — 35 und 0 °C auf ; und
a.2. 0 bis < 70 Massenteilen eines anderen Kautschuks, bezogen auf 100 Massenteile Kautschuk ;
b.1. die Polyisoprene sind durch Homopolymerisation von Isopren oder durch Polymerisation eines Monomerengemisches aus 55 bis < 100 Massenprozent Isopren, 0 bis 45 Massen-% 1,3-Butadien und 0 bis < 1 Massen-% Styrol, bezogen auf das Monomerengemisch, erhalten ;
sie weisen einen mittleren Gehalt von 60 bis 85 Massen-% Struktureinheiten (SE) auf, welche durch 1,2- und 3,4-Polymerisation der Diene erhalten sind ;
b.2. die Isopren/Styrol-Copolymerisate sind durch Polymerisation eines Monomerengemisches aus 35 bis 99 Massen-% Isopren, 1 bis 30 Massen-% Styrol und 0 bis < 50 Massen-% 1,3-Butadien, bezogen auf das Monomerengemisch, erhalten ;
sie weisen einen mittleren Gehalt von 55 bis 90 Massen-% SE auf, welche durch 1,2- und 3,4-Polymerisation der Diene und statistische Copolymerisation von Styrol erhalten sind ;
b.3. die Polyisoprene und die Isopren/Styrol-Copolymerisate sind durch die folgenden Herstellungsbedingungen charakterisiert :
b.3.1. sie sind durch Polymerisation in einem inerten, organischen Lösemittel in Gegenwart eines Katalysatorsystems aus einer polymerisationswirksamen Menge von 0,008 bis 0,1 Massen-% eines lithiumorganischen Katalysators und 0,1 bis 10 Massen-% eines Cokatalysators aus der Gruppe der Ether, tertiären Amine und ihrer Gemische, wobei das Massenverhältnis von Cokatalysator zu Katalysator 2 : 1 bis 1 000 : 1 beträgt, und in Gegenwart von 0 bis 0,1 Massen-% Divinylbenzol, jeweils bezogen auf Monomer, erhalten ;
b.3.2. die Polymerisation wird bei steigender Temperatur durchgeführt, wobei sie bei 15 bis 50 °C gestartet und bei 70 bis 145 °C beendet wird und wobei die Differenz der End- und Starttemperaturen 40 bis 125 °C beträgt.

## Claim

A process for the preparation of materials and structural elements suitable for use in sealing against non-polar organic media, the process comprising the preparation of a hot-vulcanizable composition, its shaping and vulcanization, the composition being prepared by mixing the constituents in a conventional mixer, and the constituents of the composition being :
— a rubber component,
— an effective quantity of a vulcanizing agent and
— conventional additives,

the process being characterised by the following features :

a. the rubber component consists of

a.1. more than 30 up to 100 parts by mass of a rubber selected from polyisoprenes, amorphous isoprene/styrene copolymers and mixtures thereof, the rubber having a Mooney viscosity (ML$_{1+4}$, 100 °C ; DIN 53 523) of 30 to 120, a deformation elasticity (80 °C, DIN 53 514) of 12 to 45, a heterogenity (U = (M$_w$/M$_n$) — 1) of 0.8 to 5.5 and a glass transition temperature (Tg, torsional oscillation, damping maximum, DIN 53 520) between —35 and 0 °C, and

a.2. 0 to less than 70 parts by mass of another rubber, based on 100 parts by mass of the rubber component,

b.1. any polyisoprenes have been obtained by homopolymerization of isoprene or by polymerization of a monomer mixture of 55 to less than 100 percent by mass of isoprene, 0 to 45 % by mass of 1,3-butadiene and 0 to less than 1 % by mass of styrene, relative to the monomer mixture, and have a mean content of 60 to 85 % by mass of structural units which have been obtained by 1,2-polymerization and 3,4-polymerization of the dienes,

b.2. any isoprene/styrene copolymers have been obtained by polymerization of a monomer mixture of 35 to 99 % by mass of isoprene, 1 to 30 % by mass of styrene and 0 to less than 50 % by mass of 1,3-butadiene, relative to the monomer mixture, and have a mean content of 55 to 90 % by mass of structural units which have been obtained by 1,2-polymerization and 3,4-polymerization of the dienes and random copolymerization of styrene,

b.3. any polyisoprenes and any isoprene/styrene copolymers are characterised by the following preparation conditions :

b.3.1. they have been obtained by polymerization in an inert organic solvent in the presence of a catalyst system consisting of a polymerization-active quantity of 0.008 to 0.1 % by mass of a lithium-organic catalyst and 0.1 to 10 % by mass of a co-catalyst selected from ethers, tertiary amines and mixtures thereof, the mass ratio of co-catalyst to catalyst being 2 : 1 to 1 000 : 1, and in the presence of 0 to 0.1 % by mass of divinylbenzene, in each case relative to monomer, and

b.3.2. the polymerization is carried out at rising temperature, being started at 15 to 50 °C and being terminated at 70 to 145 °C, the difference between the termination and starting temperatures being 40 to 125 °C.

## Revendication

Procédé de fabrication de matériaux et éléments de construction qui sont appropriés à l'étanchéité vis-à-vis de milieux organiques apolaires ; le procédé comprend la fabrication d'une masse vulcanisable à chaud, le formage et la vulcanisation ; la fabrication de la masse a lieu par mélange des constituants dans des mélangeurs usuels ; les constituants de la masse sont :

— un constituant caoutchouc,

— une quantité efficace d'un agent de vulcanisation et

— des additifs usuels ;

le procédé est caractérisé par les particularités suivantes :

a. le constituant caoutchouc est formé de

a.1. plus de 30 à 100 parties en masse d'un caoutchouc pris dans le groupe des poly-isoprènes, des produits de copolymérisation amorphes d'isoprène et de styrène et de leurs mélanges ;

le caoutchouc présente une viscosité Mooney (ML$_{1+4}$, 100 °C ; DIN 53 523) de 30 à 120, une élasticité Defo (80 °C, DIN 53 514) de 12 à 45, une hétérogénéité (U = (M$_w$/M$_n$) — 1) de 0,8 à 5,5 et une transition vitreuse (Tg, oscillation de torsion, maximum d'amortissement, DIN 53 520) comprise entre —35 et 0 °C ; et

a.2. de zéro à moins de 70 parties en masse d'un autre caoutchouc, rapportées à 100 parties en masse de caoutchouc ;

b.1. les poly-isoprènes sont obtenus par homopolymérisation d'isoprène ou par polymérisation d'un mélange de monomères formé de 55 à moins de 100 % en masse d'isoprène, de zéro à 45 % en masse de 1,3-butadiène et de zéro à moins de 1 % en masse de styrène, rapportés au mélange de monomères ;

ils présentent une teneur moyenne de 60 à 85 % en masse d'unités structurales (SE) qui sont obtenues par polymérisation en 1,2 et 3,4 des diènes ;

b.2. les produits de copolymérisation d'isoprène et de styrène sont obtenus par polymérisation d'un mélange de monomères formé de 35 à 99 % en masse d'isoprène, de 1 à 30 % en masse de styrène et de zéro à moins de 50 % en masse de 1,3-butadiène, rapportés au mélange de monomères ;

ils présentent une teneur moyenne de 55 à 90 % en masse d'unités structurales qui sont obtenues par polymérisation en 1,2 et 3,4 des diènes et copolymérisation statistique du styrène ;

b.3. les poly-isoprènes et les produits de copolymérisation d'isoprène et de styrène sont caractérisés par les conditions de fabrication suivantes :

b.3.1. ils sont obtenus par polymérisation dans un solvant organique inerte en présence d'un système de catalyseur formé d'une quantité, efficace pour la polymérisation, de 0,008 à 0,1 % en masse d'un catalyseur à base d'organo-lithium et de 0,1 à 10 % en masse d'un co-catalyseur pris dans le groupe des éthers, des amines tertiaires et de leurs mélanges, le rapport de masse du co-catalyseur au catalyseur étant de 2 : 1 à 1 000 : 1, et en présence de zéro à 0,1 % en masse de divinyl-benzène, chaque fois rapportés au monomère ;

b.3.2. on conduit la polymérisation à température croissante, en la commençant à une température de 15 à 50 °C et en la terminant à une température de 70 à 145 °C, la différence des températures d'achèvement et de départ étant de 40 à 125 °C.